(19) Europäisches Patentamt / European Patent Office / Office européen des brevets

(11) **EP 3 569 406 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **19174022.4**

(22) Anmeldetag: **13.05.2019**

(51) Int Cl.:
*B32B 7/12* (2006.01)  *B29C 73/10* (2006.01)
*B32B 11/04* (2006.01)  *B32B 27/08* (2006.01)
*B32B 27/20* (2006.01)  *B32B 27/30* (2006.01)
*B32B 27/32* (2006.01)  *B60R 13/08* (2006.01)
*B62D 25/24* (2006.01)

(54) **STANZLING INSBESONDERE ZUM DAUERHAFTEN VERSCHLIESSEN VON LÖCHERN**

STAMPED PIECE, IN PARTICULAR FOR PERMANENT CLOSURE OF HOLES

PIÈCE DÉCOUPÉE, EN PARTICULIER DESTINÉE À LA FERMETURE DURABLE DES TROUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2018 DE 102018207850**

(43) Veröffentlichungstag der Anmeldung:
**20.11.2019 Patentblatt 2019/47**

(73) Patentinhaber: **tesa SE**
**22848 Norderstedt (DE)**

(72) Erfinder:
• **Seibert, Matthias**
**22453 Hamburg (DE)**
• **Meyer, Katja**
**22523 Hamburg (DE)**

(74) Vertreter: **tesa SE**
**Hugo-Kirchberg-Straße 1**
**22848 Norderstedt (DE)**

(56) Entgegenhaltungen:
**WO-A1-2015/024725**  **WO-A1-2015/024726**
**DE-U1-202012 101 764**

EP 3 569 406 B1

**Beschreibung**

Die vorliegende Erfindung betrifft einen Stanzling insbesondere zum dauerhaften Verschließen von Löchern, die sich vorzugsweise in Blechen oder in Kunststoffteilen befinden, sowie ein Verfahren zum dauerhaften Verschließen von Löchern.

Bei der Fertigung von komplexeren Gebilden aus Metallblechen und/oder Kunststoffen lässt es sich konstruktiv nicht vermeiden, dass in die Bleche oder Kunststoffe Löcher geschnitten werden müssen, um an dahinter liegende Hohlräume, sei es zum Lackieren oder sei es zum Verschweißen, zu gelangen.

Diese Löcher sind nach dem Abschluss des gewünschten Prozesses zumeist nicht mehr erforderlich, oftmals sogar störend, weil durch sie Luft, Luftfeuchtigkeit oder Wasser in das Gebilde eindringen kann, was beispielsweise zu Oxidationsprozessen (Rost) führen kann. Eine einfache Lösung zur Vermeidung dieser Probleme besteht darin, die Löcher nach Gebrauch wieder zu verschließen.

Gerade bei der Produktion von modernen Fahrzeugen wie Wasserfahrzeugen, Landfahrzeugen (Lastkraftwagen, Automobilen usw.), Luftfahrzeugen, Raumfahrzeugen, Kombinationen hiervon, zum Beispiel Amphibienfahrzeugen, ist es unumgänglich, dass während des Zusammenbaus in vielen einzelnen Teilen aus Blechen oder Kunststoffen unterschiedlich große Löcher erforderlich sind. Üblicherweise liegen die Durchmesser der Löcher zwischen 5 und 50 mm. Viele dieser Löcher müssen im späteren Prozess wieder luft- und insbesondere wasserdicht verschlossen werden, um besagte Korrossionsangriffe zu unterbinden.

Daneben besteht die Anforderung, durch das Verschließen der Löcher die Geräuschdämmung des Passagierinnenraums erheblich zu verbessern.

Im Folgenden werden die der Erfindung zugrunde liegenden Probleme sowie deren Lösung am Beispiel der Karosserie eines Automobils beschrieben. Dies stellt ausdrücklich keine Beschränkung des Erfindungsgedankens auf diese Anwendung dar. Diese Anwendung ist Teil des technischen Feldes, auf dem die Erfindung besonders vorteilhaft zum Tragen kommt.

Wenn ab jetzt die Verwendung in einer Karosserie genannt ist, liest der Fachmann alle anderen Anwendungsmöglichkeiten außerhalb einer Karosserie mit.

Im Automobilbau müssen Löcher an verschiedenen Stellen in der Karosserie gesetzt beziehungsweise ausgestanzt werden. In der Regel erfolgt dies beim Stanz- und Umformungsprozess der einzelnen Blech- oder Aluminiumteile, weiter können auch Löcher in Kunststoffbauteilen gebohrt werden. Anschließend werden mittels verschiedener Fügeprozesse die einzelnen Metallteile miteinander verbunden, und es entsteht die Rohkarosse. Die darin befindlichen Löcher, Öffnungen oder Durchbrüche dienen unter anderem als Lackablauflöcher (zum Beispiel für KTL-Lacke), Wachsinjektionslöcher, Wachsablauflöcher, Löcher für spätere Verschraubungen in der Montage oder für Kabeldurchführungen. Viele dieser Löcher müssen nach dem Trocknen des kathodischen Tauchlackes wieder verschlossen werden oder auch nach dem finalen Klarlack-Prozess (dann würde der Lochverschluss im Montageprozess stattfinden).

Die Notwendigkeit eines Lochverschlusses kann viele Ursachen haben, zum Beispiel:

- Feuchtigkeit
- Akustik
- Korrosionsschutz

In der Regel werden die Löcher beziehungsweise Öffnungen mittels Spritzgussteilen (Stopfen) aus verschiedenen, je nach Anforderungsprofil angefertigten Kunststoffen verschlossen. Das können zum Beispiel Stopfen aus PET, ABS, PP, PVC, EPDM, PA und weitere gängige im Markt befindliche Kunststoffe oder auch Kombinationen aus den genannten Materialien und marktübliche hier nicht aufgeführte Kunststoffsubstrate sein. Im Einsatz finden sich auch Materialien, die einen Anteil von Glasfasern besitzen; denkbar sind auch Carbonfasern, die eine Verstärkung des Stopfens zum Beispiel gegen das Durchstoßen bieten. Grundsätzlich sind alle gängigen Kunststoffsubstrate möglich, solange diese bestimmte Parameter zu Lackierbarkeit, Temperaturstabilität, Formstabilität unter klimatischen Bedingungen bieten und auch eine gewisse Wirtschaftlichkeit im Herstellungsprozess der Stopfen erfüllen.

Momentan werden zum Verschließen von Karosserielöchern in der Regel Kunststoffstopfen verwendet, die zum einen im Einzelfall nicht sicher das Loch verschließen und zum anderen vergleichsweise aufwändig und teuer herzustellen sind. Für jede Lochgröße ist ein spezieller, auf die Lochgröße angepaßter Stopfen erforderlich. Dies bedeutet hohen logistischen und verwaltungstechnischen Aufwand für den Abnehmer der Stopfen.

So muss an der Produktionslinie eine große Anzahl von Stopfen verschiedener Größen in jeweils zugeordneten Lagerkästen vorgehalten werden.

Des Weiteren eignen sich zu diesem Zweck Klebebänder, die angepaßt auf die Lochgröße abgelängt oder gestanzt werden. Aber auch Klebebänder werden den im Markt steigenden Anforderungen nicht immer gerecht.

Hier sollen die selbstklebenden Lochverschlüsse, die eine akustische Wirkung erzielen müssen, näher betrachtet werden.

Oft werden diese akustikrelevanten Lochverschlüsse in der Montage eingesetzt, um in der Fahrgastzelle einen abgeschotteten Bereich, den Fahrzeuginnenraum, zu erzielen. Eine im Fahrzeuginnenraum störende Akustik wird zum Beispiel durch Abrollgeräusche der Reifen oder auch durch Rollsplitt sowie kleine Steinchen erzeugt, die gegen die Fahrzeugbeplankung und auch gegen die Fahrzeugträger geschleudert werden. Weiter können auch Windgeräusche, die durch strömungstechnisch ungünstiges Design entstehen, eine Ursache von höherem, unerwünschtem Geräuschpegel in der Fahrgastzelle sein.

Oft wird der durch Rollsplitt, Steinchen, Abrollgeräusche der Reifen und auch durch Bodenunebenheiten verursachte Schall in den Hohlräumen der Trägersysteme (Längs- und Querträger) in den Fahrzeuginnenraum beziehungsweise die Fahrgastzelle weitergeleitet. Dies führt dazu, dass akustisch wirksame Produkte auch außerhalb des Fahrzeuges zum Einsatz kommen müssen. Zum Beispiel ist ein wirksamer Akustikschutz, Löcher in der Bodengruppe beziehungsweise in der Fahrzeugplattform abzukleben. Oft sind Löcher, Ausstanzungen oder Bohrungen in den Längs- und Querträgern eingebracht. Hier muss besonders darauf geachtet werden, dass jede mögliche Öffnung sorgfältig verschlossen wird.

Wie schon vorab beschrieben, dienen viele Löcher in den Karosserieblechteilen, beziehungsweise den Trägersystemen dazu, dass der KTL-Lack möglichst schnell aus der Karosserie und allen Arten von Hohlräumen ablaufen kann, um Prozesszeit zu sichern. Im Umkehrschluss bedeutet das, dass unmittelbar nach dem KTL-Trockner die Öffnungen und Löcher sicher verschlossen werden müssen. In der Regel wird dies in der sogenannten PVC-Linie vollzogen. Bei diesem Bereich handelt es sich um einen Fertigungsschritt, der vor dem Füller-Lackieren beziehungsweise vor dem Basislack-Lackieren stattfindet. Somit ist ein weiteres zu erfüllendes Merkmal die Überlackierbarkeit von Produkten, die in diesem Produktionsabschnitt zum Einsatz kommen. Weiter muss eine Kompatibilität zu PVC-Nahtabdichtmaterial gewährleistet sein, da zwischen KTL-Trockner und der nächsten Lackschicht Spalte mit pumpbaren PVC-Massen abgedichtet werden.

Produkte zum Lochverschluss auf Basis von Schwerfolie in Kombination mit einem auf die Oberseite aufgebrachten Film sind aus der EP 3 036 100 A1 bekannt. Dort ist wird Stanzling insbesondere zum dauerhaften Verschließen von Löchern insbesondere in Blechen oder in Kunststoffteilen offenbart mit einem Träger aus einem Laminat aus mindestens zwei Kunststofffolien, wobei die untere Folie ein Flächengewicht von mindestens 1,5 kg/m$^2$, insbesondere zwischen 1,5 und 6 kg/m$^2$ aufweist und auf der der oberen Folie gegenüberliegenden Seite der unteren Folie eine Klebemasse, insbesondere aushärtbare oder selbstklebende Klebemasse aufgebracht ist. Die obere Folie besteht vorzugsweise aus Polyester, weiter vorzugsweise aus Polyethylenterephthalat (PET). Vorteilhaft bei den Schwerfolien, wie sie in der EP 3 036 100 A1 beschrieben werden, ist, dass diese einerseits eine ausreichend gute Verankerung zu der aufzubringenden Klebmasse ermöglichen und dass dieses andererseits auch keine Stoffe enthalten, die in Klebmasse migrieren und so die Klebmasse stören können.

Jedoch sind die mechanischen Eigenschaften, insbesondere die Reißfestigkeit der bislang bekannten Schwerfolien begrenzt.

Aus der WO 2015/024726 A1 ist ein Stanzling insbesondere zum dauerhaften Verschließen von Löchern insbesondere in Blechen oder in Kunststoffteilen bekannt, der einen aufweist, der zumindest einen wärmehärtenden Duroplasten enthält. Der Stanzling ist zumindest vor der Aushärtung selbstklebend.

Mit der DE 20 2012 101 764 U ist Verschlusselement zum Verschließen einer Öffnung in einem Bauteil, insbesondere einer Öffnung in einem Karosseriebauteil für ein Kraftfahrzeug, bekannt geworden, das eine erste Schicht aus einem dauerelastischen Material und eine zweite Schicht aus einem Metall aufweist, wobei die zweite Schicht an ihrer ersten Hauptseite fest mit einer zweiten Hauptseite der ersten Schicht verbunden ist. Die erste Schicht ist zum flächigen Ankleben an dem Bauteil an ihrer ersten Hauptseite mit einer Klebstoffschicht versehen.

Aufgabe der Erfindung ist es, einen Stanzling zur Verfügung zu stellen, der zum dauerhaften Verschließen von Löchern insbesondere in Blechen oder in Kunststoffteilen von Automobilkarosserien geeignet ist, der besagte Löcher derart verschließt, dass ein Durchtritt von Feuchtigkeit ausgeschlossen ist, der die Geräuschdämmung verbessert und der die Löcher auch bei Steinschlag am Unterboden beziehungsweise bei mechanischen Beanspruchungen im Innenraum, insbesondere im Bodenbereich, sicher verschließt.

Gelöst wird diese Aufgabe durch einen Stanzling, wie er im Hauptanspruch niedergelegt ist. Gegenstand der Unteransprüche sind vorteilhafte Weiterentwicklungen des Erfind ungsgegenstandes.

Demgemäß betrifft die Erfindung einen Stanzling insbesondere zum dauerhaften Verschließen von Löchern insbesondere in Blechen oder in Kunststoffteilen mit einem Träger aus einem Verbund, insbesondere Laminat aus mindestens zwei Kunststofffolien. Die obere Folie der mindestens zwei Kunststofffolien weist ein Flächengewicht von mindestens 1,0 kg/m$^2$ auf (im Weiteren wird die obere Folie auch als Schwerfolie bezeichnet). Die untere Folie der mindestens zwei Kunststofffolien besteht aus mindestens zwei Schichten, eine erste Schicht in Form einer Kunststofffolie, die der Schwerfolie zugewandt ist, und einer zweiten Schicht in Form einer Funktionsschicht, wobei auf der der oberen Folie abgewandten Seite der unteren Folie eine Klebemasse, insbesondere selbstklebende Klebemasse aufgebracht ist.

Die obere Folie der mindestens zwei Kunststofffolien sowie die Kunststofffolie und die Funktionsschicht der unteren Folie sind gemäß einer bevorzugten Ausführungsform jeweils vollflächig ausgeführt, das heißt, sie enthalten keine Löcher oder Fehlstellen.

Gemäß einer bevorzugten Ausführungsform der Erfindung weist die obere Schwerfolie ein Flächengewicht zwischen 1,0 und 6 kg/m$^2$, vorzugsweise zwischen 1,5 und 3,9 kg/m$^2$, mehr bevorzugt zwischen 1,5 und 2,5 kg/m$^2$ auf.

Die Schwerfolie kann aus beliebigen Polymeren bestehen, entweder allein oder in Mischung.

Geeignete Polymere sind olefinische Polymere wie Homo- oder Copolymere von Olefinen wie Ethylen, Propylen oder Butylen (der Begriff Copolymer ist hier sinngemäß dahingehend zu verstehen, dass er Terpolymere einschließt), Polypropylenhomopolymere oder Polypropylencopolymere einschließlich der Block-(Impact-) und Randompolymere.

Weitere Polymere können aus der Gruppe der Polyester wie insbesondere Polyethylenterephthalat (PET), Polyamide, Polyurethane, Polyoxymethylen, Polyvinylchlorid (PVC), Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES), Polyimid (PI), Polyarylensulfide und/oder Polyarylenoxide ausgewählt werden.

Diese Polymere, allein oder in Mischung, sind zur Bildung der Schwerfolie geeignet.

Bevorzugt kann die obere Folie aus Polyester (insbesondere aus Polyethylenterephthalat (PET)), Polyurethan oder PVC bestehen.

Vorzugsweise ist die Schwerfolie mit mineralischen Füllstoffen gefüllt, insbesondere Kalksteinmehl beziehungsweise Kalkspat ($CaCO_3$ und Schwerspat ($BaSO_4$). Des Weiteren können zur Füllung Talkum, Schiefermehl, Graphit, Glimmer oder Asbest (letzteres heute eher weniger) verwendet werden.

Der Anteil an Füllstoffen beträgt insbesondere 30 bis 90 Gew.-%, vorzugsweise 40 bis 70 Gew.-% bezogen auf das Gesamtgewicht der Folie.

In Volumenprozent ausgedrückt liegt der Anteil vorzugsweise bei 30 bis 60 Vol.-%, weiter vorzugsweise bei 45 bis 55 Vol.-% bezogen aus das Gesamtvolumen der Folie.

Die Schwerfolie kann zusätzlich Öl zum Quellen und zur besseren Aufnahme der Füllstoffe enthalten. Der Ölgehalt kann zwischen 8 Gew.-% bis 30 Gew.-%, vorzugsweise 10 Gew.-% bis 25 Gew.-% bezogen aus das Gesamtgewicht der Folie liegen.

Die Schwerfolie ist bevorzugt eine insbesondere mineralisch gefüllte Polyolefinfolie, eine insbesondere mineralisch gefüllte Folie aus Polyethylen und EVA oder eine elastomermodifizierte Bitumenfolie. Weiter vorzugsweise enthält die Schwerfolie Öl.

Die obere Folie weist gemäß einer bevorzugten Ausführungsform der Erfindung die folgende Zusammensetzung auf:

| | |
|---|---|
| 30 bis 82 Gew.-% | Füllstoff, insbesondere $CaCO_3$ |
| 10 bis 50 Gew.-% | Polyethylen |
| 0 bis 20 Gew.-% | EVA |
| 8 bis 30 Gew.-% | Öl |

Die Dicke der oberen Folie liegt gemäß einer bevorzugten Ausführungsform zwischen 400 und 3500 $\mu$m, vorzugsweise zwischen 1100 und 3500 $\mu$m, weiter vorzugsweise zwischen 1700 und 3500 $\mu$m.

Mögliche Herstellungsvarianten einer solchen Schwerfolie sind Extrusionsprozesse oder Gießprozesse.

Die aus mindestens zwei Kunststofffolien bestehende untere Folie ist mit der Schwerfolie fest verbunden, wobei zwischen oberer und unterer Folie weitere Schichten insbesondere in Form von Folien vorhanden sein können.

Die Polymere der Kunststofffolie, die dem Schwerfilm zugewandt ist, entsprechen gemäß einer bevorzugten Variante einem in der Schwerfolie verwendeten Polymertypen. So können für einen Schwerfilm auf Basis von Polyolefinen für die Kunststofffolie zum Beispiel PE (Polyethylen) oder PP (Polypropylen) eingesetzt werden.

Die Kunststofffolienschicht, die der Schwerfolie zugewandt ist, enthält, insbesondere besteht gemäß einer bevorzugten Ausführungsform der Erfindung aus Polyolefinen, worunter Polyethylen, Polypropylen sowie Polyethylen- und Polypropylenhomo- und -copolymere verstanden werden. Die Copolymere können statistisch verteilte oder Blockcopolymere mit Comonomeren wie Ethylen beziehungsweise Propylen oder anderen $\alpha$-Olefinen sein. Diese Folie kann auch ein Blend mit anderen Polyolefinen, insbesondere Polyethylen oder Ethylencopolymere mit Comonomeren wie 1-Buten, 1-Hexen, 1-Octen (je nach Anteil und Herstellungsverfahren dann LLDPE, VLDPE oder ULDPE oder Metallocen-PE genannt), aber auch Ethylen-Styrol-Copolymere, Ethylen mit polaren Comonomeren wie Acrylsäure, Alkylacrylaten, Alkylmethacrylaten oder Vinylacetat oder gepropfte Copolymere zum Beispiel mit Maleinsäureanhydrid sein.

Die zweite Schicht der unteren Folie ist eine Funktionsschicht und weist eine sperrende Wirkung gegenüber migrierfähigen Substanzen wie Weichmacher, insbesondere Öle auf, die aus der Schwerfolie in die Klebemasse diffundieren könnten. Vorzugsweise weist die Funktionsschicht gleichzeitig eine sperrende Wirkung für migrierfähige Substanzen wie Klebharze auf, die umgekehrt aus der Klebemasse in die Schwerfolie diffundieren könnten. Vorzugsweise ist die Sperrwirkung der Funktionsschicht zu beiden Seiten verwirklicht. Des Weiteren kann diese Schicht auch haftvermittelnde Eigenschaften aufweisen.

Die Polymere der Funktionsschicht können aus der Gruppe der Polyester wie insbesondere Polyethylenterephthalat (PET), Polyamide, Polyurethane, Polyoxymethylen, Polyvinylchlorid (PVC), Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES), Polyimid (PI), Polyarylensulfide und/oder Polyarylenoxide ausgewählt werden, entweder allein oder in Mischung. Bevorzugt enthält, weiter bevorzugt besteht die Funktionsschicht aus einem der genannten Polymere.

Besonders bevorzugt besteht die Funktionsschicht aus Polyamid.

Der Vorteil an Polyamid besteht darin, dass eine Folie aus Polyamid gute Barriereeigenschaften gegenüber Öl aufweist.

Gemäß einer bevorzugten Ausführungsform der Erfindung bestehen die Kunststofffolie aus Polyethylen und die Funktionsschicht aus Polyamid.

Zwischen der ersten Schicht in Form einer Kunststofffolie und der zweiten Schicht in Form einer Funktionsschicht können weitere (Funktions)schichten wie etwa Haftvermittler zur Verbesserung der Verbundhaftung vorhanden sein.

Solche mehrschichtigen Aufbauten sind vorzugsweise aus Blas- und Castextrusion zugänglich. Es besteht aber auch die Möglichkeit, diese durch Lamination von Folien mit oder ohne Kaschierkleber herzustellen.

Die Dicke der unteren Folie liegt vorzugsweise zwischen 25 und 200 $\mu$m, besonders bevorzugt zwischen 40 und 140 $\mu$m, ganz besonders bevorzugt zwischen 50 und 90 $\mu$m.

Die Dicke der Funktionsschicht wird bevorzugt gering wie möglich gewählt, da die entsprechend funktionellen Polymere üblicherweise teurer sind.

Bezogen auf die Gesamtdicke der unteren Folie weist die Funktionsschicht eine Dicke vorzugsweise von 5 bis 80 %, weiter vorzugsweise von 20 bis 50 % auf.

Wenn die untere Folie nur aus einer Kunststofffolie und aus der Funktionsschicht besteht, beträgt die Dicke der Kunststofffolienschicht vorzugsweise 20 bis 95 %, besonders bevorzugt 50 bis 80 % der Gesamtfoliendicke.

Die Dicke der Funktionsschicht wird so gewählt, dass sie innerhalb der technisch bedingten Dickenschwankung nicht Null wird. Diese fehlt also niemals stellenweise völlig.

Das Aufbringen der mehrschichtigen unteren Folie erfolgt vorzugsweise direkt im Herstellungsprozess der Schwerfolie. Dazu wird das heiße Polymergemisch des Schwerfilms auf die Oberfläche der Kunststofffolie der unteren Folie aufgebracht, die aus Polymertype besteht, die mit dem in der Schwerfolie verwendeten Polymertypen verträglich, also mischbar ist. Die Kunststofffolie schmilzt an, vorzugsweise in einem Bereich bis zu 90 % der Gesamtdicke, weiter vorzugsweise in einem Bereich bis zu 10 % der Gesamtdicke. Die Polymere der Schwerfolie und der Kunststofffolie vermischen sich, so dass sich nach dem Erkalten ein unlösbarer Verbund ergibt.

Der Schmelzpunkt des Polymers der Funktionsschicht liegt insbesondere oberhalb des Schmelzpunkts des Polymers der oberen Folie, insbesondere um 20 °C, vorzugsweise um 30 °C, weiter vorzugsweise um 50 °C, um ein Anschmelzen zu verhindern.

Gängige Verfahren zur Herstellung des Trägers ist zum Beispiel ein Castextrusionsprozess des Schwerfolienmaterials auf die mehrschichtige untere Folie. Dabei wird die untere Folie üblicherweise über die Kühlwalze der Extrusionsanlage geführt. Es sind aber auch andere gängige Beschichtungsverfahren möglich.

Bevorzugt erfolgt die Herstellung durch Kalanderbeschichtung.

Dem Fachmann sind neben diesem Verfahren noch weitere Möglichkeiten geläufig eine solche Verbindung zwischen zwei Filmen herzustellen. Exemplarisch sei hier noch die Heißlamination genannt.

Auf die der unteren Folie gegenüberliegenden Seite der Schwerfolie können weitere Lagen wie ein stanzbares Aluminiumblech, ein korrosionsbeständiges Stahlblech, eine Folie aus beliebigen Polymeren oder eine Aluminiumfolie mit einem Gelege für die Verstärkung oder Festigkeit laminiert sein.

Die Polymere zur Bildung der oberen Folie und der unteren Folie können in Reinform oder in Blends mit Additiven wie Antioxidantien, Lichtschutzmitteln, Antiblockmitteln, Gleit- und Verarbeitungshilfsmitteln, Füllstoffen, Farbstoffen, Pigmenten Treib- oder Nucleierungsmitteln vorliegen.

Vorzugsweise weisen die Folien keines der genannten Additive auf.

Gemäß einer weiteren Ausführungsform kann der Träger auch mehr als zwei Folien aufweisen.

In einer vorteilhaften Ausgestaltung der Erfindung ist im Träger (zwischen der oberen und der unteren Folie) oder am Träger ein schichtförmiger Körper vorhanden, der aus Metall, aus einer Metallfolie, zum Beispiel Aluminiumfolie, oder aus einer Metall enthaltenden Folie besteht.

Als Metall hat sich Aluminium als hervorragend herausgestellt. Reine Metallschichten stellen eine hohe Barrierewirkung gegen die Migration und Diffusion der Reaktanden dar. In weiter vorteilhafter Weise können als Trennschichten erfindungsgemäß Schichten aus Metalloxid (MeOx-Schichten) verwendet werden. Vorteilhafte Metalloxidschichten bestehen beispielsweise aus Siliziumdioxid ($SiO_2$), Titandioxid ($TiO_2$) oder Zink-Zinn-Oxid (ZnSnO), oder sie umfassen eines oder mehrerer dieser Metalloxide.

In einer weiteren vorteilhaften Ausführungsform der Erfindung sind die obere und/oder untere Folie durch integrierte beziehungsweise angefügte Fasern oder Filamente verstärkt, so dass deren Festigkeit insbesondere in Längsrichtung verstärkt ist.

Im Sinne dieser Erfindung wird unter einem Filament ein Bündel paralleler, gerader Einzelfasern verstanden, in der Literatur auch oft als Multifilament bezeichnet. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden. Im Weiteren wird für alle diese Ausführungsformen - sowie für die mit Fasern verstärkte Ausführungsform - verallgemeinernd nur noch der Begriff Filament verwendet.

In einer bevorzugten Variante ist die auf dem Träger aufgebrachte Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Dabei kann auf alle bekannten Klebemassensysteme zurückgegriffen werden. Neben Natur- oder Synthesekautschuk basierten Klebemassen sind insbesondere Silikonklebemassen sowie Polyacrylatklebemassen, vorzugsweise eine niedermolekulare Acrylatschmelzhaftklebemasse, verwendbar.

Bevorzugt werden Klebemassen, die auf Acrylat oder Silikon basieren.

Die Klebemasse kann aus der Gruppe der Naturkautschuke oder der Synthesekautschuke oder aus einem beliebigen Blend aus Naturkautschuken und/oder Synthesekautschuken gewählt werden, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.

Stellvertretend genannt seien an dieser Stelle vor allem die besonders verträglichen Styrol-Isopren-Styrol (SIS)- und Styrol-Butadien-Styrol (SBS)-Typen. Geeignete Elastomere zum Abmischen sind auch zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Daneben hat sich ein 100%-System auf Styrol-Isopren-Styrol (SIS) als geeignet erwiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.

Die thermische Anregung der Vernetzer kann auch durch IR-Strahlen oder hochenergetische Wechselfelder erfolgen.

Verwendbar sind Klebemassen auf Lösemittelbasis, auf wässriger Basis oder auch als Hotmeltsystem. Auch eine Masse auf Acrylathotmelt-Basis ist geeignet, wobei diese einen K-Wert von mindestens 20 aufweisen kann, insbesondere größer 30, erhältlich durch Aufkonzentrieren einer Lösung einer solchen Masse zu einem als Hotmelt verarbeitbaren System

Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der DE 43 13 008 A1 dargelegt, auf deren Inhalt hiermit Bezug genommen wird und deren Inhalt Teil dieser Offenbarung und Erfindung wird.

Die Klebemasse auf Acrylathotmelt-Basis kann aber auch chemisch vernetzt sein.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Eine Klebemasse, die sich ebenfalls als geeignet zeigt, ist eine niedermolekulare Acrylatschmelzhaftklebemasse, wie sie unter der Bezeichnung acResin UV oder Acronal®, insbesondere Acronal® DS 3458 oder AC Resin A 260UV, von der BASF geführt wird. Diese Klebemasse mit niedrigem K-Wert erhält ihre anwendungsgerechten Eigenschaften durch eine abschließende strahlenchemisch ausgelöste Vernetzung.

Abschließend sei erwähnt, dass auch auf Polyurethan basierende Kleber geeignet sind.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutz-, Vernetzungsmitteln, Vernetzungspromotoren oder Elastomeren abgemischt sein.

Als Klebrigmacher finden die bereits ausführlich beschriebenen Harze Verwendung.

Geeignete Füllstoffe und Pigmente sind beispielsweise Ruß, Titandioxid, Calciumcarbonat, Zinkcarbonat, Zinkoxid, Silicate oder Kieselsäure.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacrylsäure.

Unter einem "Ply(meth)acrylat" wird ein Polymer verstanden, dessen Monomerbasis zu mindestens 60 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 50 Gew.-%, bezogen auf die gesamte Monomerbasis des betreffenden Polymers, enthalten sind. Insbesondere wird unter einem "Poly(meth)acrylat" ein Polymerisat verstanden, welches durch radikalische Polymerisation von Acryl- und/oder Methacrylmonomeren sowie gegebenenfalls weiteren, copolymerisierbaren Monomeren erhältlich ist.

Erfindungsgemäß ist das Poly(meth)acrylat beziehungsweise sind Poly(meth)acrylate zu 30 bis 65 Gew.-%, bezogen auf das Gesamtgewicht der Haftklebemasse, enthalten. Bevorzugt enthält die erfindungsgemäße Haftklebemasse 35 bis 55 Gew.-%, bezogen auf das Gesamtgewicht der Haftklebemasse, mindestens eines Poly(meth)acrylats.

Die Glasübergangstemperatur der erfindungsgemäß einsetzbaren Poly(meth)acrylate beträgt bevorzugt < 0 °C, stärker bevorzugt zwischen -20 und -50 °C.

Die Glasübergangstemperatur von Polymeren oder Polymerblöcken in Blockcopolymeren wird im Rahmen dieser Erfindung mittels dynamischer Scanning Kalorimetrie (DSC) bestimmt.

Vorzugsweise sind die Poly(meth)acrylate der erfindungsgemäßen Haftklebemasse erhältlich durch zumindest anteiliges Einpolymerisieren von funktionellen, bevorzugt mit Epoxidgruppen vernetzungsfähigen Monomeren. Besonders bevorzugt handelt es sich dabei um Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen; insbesondere bevorzugt sind carbonsäuregruppenhaltige Monomere. Es ist ganz besonders vorteilhaft, wenn das Polyacrylat einpolymerisierte Acrylsäure und/oder Methacrylsäure aufweist. All diese Gruppen weisen eine Vernetzungsfähigkeit mit Epoxidgruppen auf, wodurch das Polyacrylat vorteilhaft einer thermischen Vernetzung mit eingebrachten Epoxiden zugänglich wird.

Weitere Monomere, die als Comonomere für die Poly(meth)acrylate verwendet werden können, sind neben Acrylsäure- und/oder Methacrylsäureestern mit bis zu 30 C-Atomen pro Molekül beispielsweise Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und einer oder zwei Doppelbindungen oder Mischungen dieser Monomere.

Die Eigenschaften des betreffenden Poly(meth)acrylats lassen sich insbesondere über eine Variation der Glasübergangstemperatur des Polymers durch unterschiedliche Gewichtsanteile der einzelnen Monomere beeinflussen. Das beziehungsweise die Poly(meth)acrylat(e) der Erfindung können vorzugsweise auf die folgende Monomerzusammensetzung zurückgeführt werden:

a) Acrylsäureester und/oder Methacrylsäureester der folgenden Formel $CH_2 = C(R^I)(COOR^{II})$
wobei $R^I$ = H oder $CH_3$ und $R^{II}$ ein Alkylrest mit 4 bis 14 C-Atomen ist,
b) olefinisch ungesättigte Monomere mit funktionellen Gruppen der für eine Reaktivität mit Epoxidgruppen bereits definierten Art,
c) optional weitere Acrylate und/oder Methacrylate und/oder olefinisch ungesättigte Monomere, die mit der Komponente (a) copolymerisierbar sind.

Die Anteile der entsprechenden Komponenten (a), (b), und (c) werden bevorzugt derart gewählt, dass das Polymerisationsprodukt eine Glasübergangstemperatur von < 0 °C, stärker bevorzugt zwischen -20 und -50 °C (DSC) aufweist. Es ist besonders vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc.).

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat und deren verzweigte Isomere, wie zum Beispiel Isobutylacrylat, Isooctylacrylat, Isooctylmethacrylat, 2-Ethylhexylacrylat oder 2-Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine. Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, $\beta$-Acryloyloxypropionsäure, Trichloracrylsäure, Vinylessigsäure, Vinylphosphonsäure, Maleinsäureanhydrid, Hydroxyethylacrylat, insbesondere 2-Hydroxyethylacrylat, Hydroxypropylacrylat, insbesondere 3-Hydroxypropylacrylat, Hydroxybutylacrylat, insbesondere 4-Hydroxybutylacrylat, Hydroxyhexylacrylat, insbesondere 6-Hydroxyhexylacrylat, Hydroxyethylmethacrylat, insbesondere 2-Hydroxyethylmethacrylat, Hydroxypropylmethacrylat, insbesondere 3-Hydroxypropylmethacrylat, Hydroxybutylmethacrylat, insbesondere 4-Hydroxybutylmethacrylat, Hydroxyhexylmethacrylat, insbesondere 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

Beispielhafte Monomere der Komponente (c) sind:

Methylacrylat, Ethylacrylat, Propylacrylat, Methylmethacrylat, Ethylmethacrylat, Benzylacrylat, Benzylmethacrylat, *sec*-Butylacrylat, *tert*-Butylacηlat, Phenylacrylat, Phenylmethacrylat, Isobornylacrylat, Isobornylmethacrylat, *tert*-Butylphenylacrylat, *tert*-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methylundecyl)acrylamid, *N*-(n-Butoxymethyl)acrylamid, *N*-(Butoxymethyl)methacrylamid, *N*-(Ethoxymethyl)acrylamid, *N*-(n-Octadecyl)acrylamid, weiterhin *N,N*-Dialkyl-substituierte Amide, wie beispielsweise *N,N*-Dimethylacrylamid, *N,N*-Dimethylmethacrylamid, *N*-Benzylacrylamide, *N*-Isopropylacrylamid, *N-tert*-Butylacrylamid, *N-tert*-Octylacηlamid, *N*-Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N*-Vinyllactam, *N*-Vinylpyrrolidon, Styrol, $\alpha$- und p-Methylstyrol, $\alpha$-Butylstyrol, 4-n-Butylstyrol, 4-n-Decylstyrol, 3,4-Dimethoxystyrol, Makromonomere wie 2-Polystyrolethylmethacrylat (gewichtsmittleres Molekulargewicht Mw, bestimmt mittels GPC, von 4000 bis 13000 g/mol), Poly(methylmethacrylat)ethylmethacrylat (Mw von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-*tert*-Butylacrylamid und Allylacrylat.

Die Herstellung der Polyacrylate ("Polyacrylate" wird im Rahmen der Erfindung als synonym mit "Poly(meth)acrylate" verstanden) kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Vorzugsweise werden die Polyacrylate durch Polymerisation der Monomere in Lösungsmitteln, insbesondere in Lösungsmitteln mit einem Siedebereich von 50 bis 150 °C, bevorzugt von 60 bis 120 °C unter Verwendung der üblichen Mengen an Polymerisationsinitiatoren, die im allgemeinen bei 0,01 bis 5, insbesondere bei 0,1 bis 2 Gew.-%, bezogen auf das Gesamtgewicht der Monomeren, liegen, hergestellt.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-*t*-butylperoxid, Cyclohexylsulfonylacetylperoxid, Diisopropylpercarbonat, *t*-Butylperoktoat, Benzpinacol. In einer sehr bevorzugten Vorgehensweise wird als radikalischer Initiator 2,2'-Azobis(2-methylbutyronitril) (Vazo® 67™ der Firma DuPont) oder 2,2'-Azobis(2-methylpropionitril) (2,2'-Azobisisobutyronitril; AIBN; Vazo® 64™ der Firma DuPont) verwendet.

Als Lösungsmittel für die Herstellung der Poly(meth)acrylate kommen Alkohole wie Methanol, Ethanol, n- und iso-Propanol, n- und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Bevorzugt erfolgt nach der Herstellung (Polymerisation) der Polyacrylate eine Aufkonzentration, und die weitere Verarbeitung der Polyacrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die gewichtsmittleren Molekulargewichte Mw der Polyacrylate liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol. Die Angaben des mittleren Molekulargewichtes Mw und der Polydispersität PD in dieser Schrift beziehen sich auf die Bestimmung per Gelpermeationschromatographie. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Die Polyacrylate haben vorzugsweise einen K-Wert von 30 bis 90, besonders bevorzugt von 40 bis 70, gemessen in Toluol (1 %ige Lösung, 21 °C). Der K-Wert nach Fikentscher ist ein Maß für das Molekulargewicht und die Viskosität des Polymerisats.

Erfindungsgemäß besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Polyacrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letzteres besonders gut geeignet ist. Auch über N-Oxyle lassen sich entsprechende Polyacrylate herstellen. Ferner lässt sich in vorteilhafter Weise die Atom Transfer Radical Polymerization (ATRP) zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden.

Die Monomere zur Herstellung der Poly(meth)acrylate enthalten bevorzugt anteilig funktionelle Gruppen, die geeignet sind, mit Epoxidgruppen Verknüpfungsreaktionen einzugehen. Dies ermöglicht vorteilhaft eine thermische Vernetzung der Polyacrylate durch Reaktion mit Epoxiden. Unter Verknüpfungsreaktionen werden insbesondere Additions- und Substitutionsreaktionen verstanden. Bevorzugt kommt es also zu einer Verknüpfung der die funktionellen Gruppen tragenden Bausteine mit Epoxidgruppen tragenden Bausteinen, insbesondere im Sinne einer Vernetzung der die funktionellen Gruppen tragenden Polymerbausteine über Epoxidgruppen tragende Vernetzermoleküle als Verknüpfungsbrücken. Bei den epoxidgruppenhaltigen Substanzen handelt es sich bevorzugt um multifunktionelle Epoxide, also solche mit mindestens zwei Epoxidgruppen; entsprechend kommt es bevorzugt insgesamt zu einer mittelbaren Verknüpfung der die funktionellen Gruppen tragenden Bausteine.

Die Poly(meth)acrylate der erfindungsgemäßen Haftklebemasse sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die sowohl eine ausreichend lange Verarbeitungszeit gewährleisten, sodass es nicht zu einer Vergelung während des Verarbeitungsprozesses, insbesondere des Extrusionsprozesses, kommt, als auch zu einer schnellen Nachvernetzung des Polymers auf den gewünschten Vernetzungsgrad bei niedrigeren Temperaturen als der Verarbeitungstemperatur, insbesondere bei Raumtemperatur, führen. Möglich ist beispielsweise eine Kombination aus Carboxyl-, Amin- und/oder Hydroxygruppen enthaltenden Polymeren und Isocyanten, insbesondere aliphatischen oder mit Aminen deaktivierten trimerisierten Isocyanaten, als Vernetzer.

Geeignete Isocyanate sind insbesondere trimerisierte Derivate von MDI [4,4-Methylen-di(phenylisocyanat)], HDI [Hexamethylendiisocyanat, 1,6-Hexylendiisocyanat] und/oder IPDI [Isophorondiisocyanat, 5-Isocyanato-1-isocyanatomethyl-1,3,3-trimethylcyclohexan], beispielsweise die Typen Desmodur® N3600 und XP2410 (jeweils BAYER AG: Aliphatische Polyisocyanate, niedrigviskose HDI-Trimerisate). Ebenfalls geeignet ist die oberflächendeaktivierte Dispersion von mikronisiertem trimerisiertem IPDI BUEJ 339®, jetzt HF9® (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyanat, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG).

Bevorzugt werden thermische Vernetzer zu 0,1 bis 5 Gew.-%, insbesondere zu 0,2 bis 1 Gew.-%, bezogen auf die Gesamtmenge des zu vernetzenden Polymers, eingesetzt.

Bevorzugt sind die Poly(meth)acrylate der erfindungsgemäßen Haftklebemasse mittels Epoxid(en) bzw. mittels einer oder mehrerer epoxidgruppenhaltigen Substanz(en) vernetzt. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole (insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche), Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanillin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureresten ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Bisphenol-A-diglycidether und Bisphenol-F-diglycidether.

Besonders bevorzugt für die Poly(meth)acrylate als zu vernetzende Polymere ist die Verwendung eines beispielsweise in der EP 1 978 069 A1 beschriebenen Vernetzer-Beschleuniger-Systems ("Vernetzungssystem"), um eine bessere Kontrolle sowohl über die Verarbeitungszeit, Vernetzungskinetik sowie den Vernetzungsgrad zu erhalten. Das Vernetzer-Beschleuniger-System umfasst zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltigen Verbindungen beschleunigend wirkende Substanz als Beschleuniger.

Als Beschleuniger werden erfindungsgemäß besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine, die mit den Bausteinen der zu vernetzenden Polymere keine oder nur geringfügige Reaktionen eingehen.

Prinzipiell können als Beschleuniger sowohl primäre ($NRH_2$), sekundäre ($NR_2H$) als auch tertiäre Amine ($NR_3$) gewählt werden, selbstverständlich auch solche, die mehrere primäre und/oder sekundäre und/oder tertiäre Amingruppen aufweisen. Besonders bevorzugte Beschleuniger sind aber tertiäre Amine wie beispielsweise Triethylamin, Triethylendiamin, Benzyldimethylamin, Dimethylamino-methylphenol, 2,4,6-Tris-(N,N-dimethylaminomethyl)-phenol, N,N'-Bis(3-(dimethyl-amino)propyl)harnstoff. Als Beschleuniger können vorteilhaft auch multifunktionelle Amine wie Diamine, Triamine und/oder Tetramine eingesetzt werden. Hervorragend geeignet sind zum Beispiel Diethylentriamin, Triethylentetramin, Trimethylhexamethylendiamin.

Als Beschleuniger werden darüber hinaus bevorzugt Aminoalkohole verwendet. Besonders bevorzugt werden sekundäre und/oder tertiäre Aminoalkohole eingesetzt, wobei im Falle mehrerer Aminfunktionalitäten pro Molekül bevorzugt mindestens eine, bevorzugt alle Aminfunktionalitäten sekundär und/oder tertiär sind. Als bevorzugte Aminoalkohol-Beschleuniger können Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1 -[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und/oder N,N,N'-Trimethylaminopropylethanolamin eingesetzt werden.

Weitere geeignete Beschleuniger sind Pyridin, Imidazole (wie beispielsweise 2-Methylimidazol) und 1,8-Diazabicyclo[5.4.0]undec-7-en. Auch cycloaliphatische Polyamine können als Beschleuniger eingesetzt werden. Geeignet sind auch Beschleuniger auf Phosphatbasis wie Phosphine und/oder Phosphoniumverbindungen, wie beispielsweise Triphenylphosphin oder Tetraphenylphosphoniumtetraphenylborat.

Acrylathaftklebemassen sind typischerweise radikalisch polymerisierte Copolymere aus Acrylsäurealkylestern oder Methacrylsäurealkylestern von C1- bis C20-Alkoholen wie zum Beispiel Methylacrylat, Ethyl(meth)acrylat, n-Butyl(meth)acrylat, t Butyl(meth)acrylat, Cyclohexyl(meth)acrylat, 2-Ethylhexyl(meth)acrylat, n-Octyl(meth)acrylat, iso Octyl(meth)acrylat, n-Decyl(meth)acrylat, n-Dodecyl(meth)acrylat, Tetradecyl(meth)acrylat, Lauryl(meth)acrylat, Oleyl(meth)acrylat, Palmityl(meth)acrylat und Stearyl(meth)acrylat neben weiteren (Meth)acrylsäureestern wie Isobornyl(meth)acrylat, Benzyl(meth)acrylat, Phenyl(meth)acrylat und 2 Bromoethyl(meth)acrylat, Alkoxyalkyl(meth)acrylate wie Ethoxyethyl(meth)acrylat. Weiterhin fallen darunter Ester von ethylenisch ungesättigten Di- und Tricarbonsäuren und Anhydriden wie Ethylmaleat, Dimethylfumarat und Ethylmethylitaconat. Ebenfalls fallen vinylaromatische Monomere wie zum Beispiel Styrol, Vinyltoluol, Methylstyrol, n Butylstyrol, Decylstyrol darunter.

Weitere mögliche Monomere sind Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Nitrile wie Acrylnitril oder Methacrylnitril, Säureamide wie Acrylamid oder Methacrylamid und ungesättigte Kohlenwasserstoffe mit 2 bis 8 Kohlenstoffatomen wie Ethylen, Propen, Butadien, Isopren, 1-Hexen oder 1-Octen.

Zur Beeinflussung der physikalischen und optischen Eigenschaften der Haftklebemasse kommen mehrfunktionale ethylenisch ungesättigte Monomere als Vernetzermonomere in Frage. Beispiele hierzu sind Divinylbenzol, Alkyldiacrylate wie 1,2-Ethylenglykoldiacrylat, 1,4-Butandioldiacrylat, 1,6 Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Unter die Gruppe der mehrfunktionellen Monomere fallen auch UV-vernetzbare Monomere, wie zum Beispiel mit (Meth)acrylat-funktionalisierte Derivate des Benzophenons oder des Benzoins.

Eine weitere Gruppe von Monomeren sind solche, die ein latentes Vernetzungspotential im Polymer erzeugen und nach dem Eintrocknen der Klebemasse spontan (häufig katalysiert) zu einem Netzwerkaufbau führen. Ein solches Monomer ist zum Beispiel Glycidymethyacrylat, dessen Oxiranring mit Hydroxyl- oder insbesondere Carboxylatfunktionen unter Ringöffnung zu einer kovalenten Bindung führt. Diese Reaktion findet beschleunigt in Gegenwart von Zinkionen oder, besonders in Anwesenheit von Carboxylfunktionen, Aminen statt.

Zur Erzielung haftklebriger Eigenschaften muss die Verarbeitungstemperatur der Klebmasse oberhalb ihrer Glasübergangstemperatur sein, um viskoelastische Eigenschaften zu haben.

Weiterhin lassen sich erfindungsgemäße aktivierbare Klebmassen auf Acrylatbasis einsetzen. So bestehen dann die aktivierbaren Klebmassen in einer besonders bevorzugten Auslegung zu einem Basispolymer a) bestehend aus

a1) 40 bis 95 Gew.-% Acrylsäureester und/oder Methacrylsäureester mit der folgenden Formel

$$CH_2 = C(R_1)(COOR_2),$$

wobei $R_1$ = H oder $CH_3$ und $R_2$ = H und/oder Alkylketten mit 1 bis 30 C-Atomen sind.

a2) 5 bis 30 Gew.-% eines copolymerisierbaren Vinylmonomers mit zumindestens einer Carbonsäure und/oder Sulfonsäure- und/oder Phosphonsäuregruppe

a3) 1 bis 10 Gew.-% eines copolymerisierbaren Vinylmonomers mit zumindest einer Epoxygruppe oder einer Säureanhydridfunktion

a4) 0 bis 20 Gew.-% eines copolymerisierbaren Vinylmonomers, welches mit der funktionellen Gruppe zur Kohäsionssteigerung, der Erhöhung der Reaktivität der Vernetzung, oder zur direkten Vernetzung beitragen kann, und

b) 5 bis 50 Gew.-% eines Epoxy-Harzes oder einer Mischung aus mehreren EpoxyHarzen

Das Polymer a) kann eine aktivierbare Haftklebemasse umfassen, die unter Temperatureinwirkung und optionalen Druck haftklebrig wird und nach der Verklebung und Abkühlen durch die Verfestigung eine hohe Klebkraft aufbaut.

Je nach Anwendungstemperatur weisen diese aktivierbaren Haftklebemassen unterschiedliche statische Glasübergangstemperaturen $T_{G,A}$ oder Schmelzpunkte $T_{S,A}$ auf.

In einer sehr bevorzugten Auslegung werden für die Monomere a1) Acrylmomonere eingesetzt, die Acryl- und Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere wie zum Beispiel 2-Ethylhexylacrylat. Weitere einzusetzende Verbindungsklassen, die ebenfalls in geringen Mengen unter a1) hinzugesetzt werden können sind Methylmethacrylate, Cyclohexylmethacrylate, Isobornylacrylat und Isobornylmethacrylate.

In einer bevorzugten Weise werden als Monomere a2) Itaconsäure, Acrylsäure, Methacrylsäure, Vinylessigsäure, Fumarsäure, Crotonsäure, Aconitsäure, Dimethylacrylsäure, β-Acryloyloxypropionsäure, Trichloracrylsäure, Vinylphosphonsäure und Vinylsulfonsäure eingesetzt werden.

In einer bevorzugten Weise werden als Monomere a3) Glycidylmethacrylat Maleinsäureanhydrid und Itaconsäureanhydrid eingesetzt.

In einer sehr bevorzugten Auslegung werden für die Monomere a4) Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

In einer weiteren sehr bevorzugten Auslegung für die Monomere a4) Monomere mit folgenden funktionellen Gruppen eingesetzt: Hydroxy-, Säureamid-, Isocyanato- oder Aminogruppen.

Weitere besonders bevorzugte Beispiele für die Komponente a4) sind Hydroxyethylacrylat, Hydroxypropylacrylat, Hydroxyethylmethacrylat, Hydroxypropylmethacrylat, Allylalkohol, Acrylamid, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, 6-Hydroxyhexylmethacrylat, N-tert.-Butylacrylamid, N-Methylolmethacrylamid, N-(Butoxymethyl)methacrylamid, N-Methylolacrylamid, N-(Ethoxymethyl)acrylamid, N-Isopropylacrylamid, Tetrahydrofurfurylacrlyat, wobei diese Aufzählung nicht abschließend ist.

In einer weiteren bevorzugten Auslegung werden für die Komponente a4) aromatische Vinylverbindungen eingesetzt, wobei bevorzugt die aromatischen Kerne aus $C_4$ bis $C_{18}$ bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere wiederum dermaßen gewählt, dass die resultierenden Polymere als industriell verwendbare Klebemassen oder Haftklebemassen eingesetzt werden können, insbesondere derart, dass die resultierenden Polymere klebende oder haftklebende Eigenschaften entsprechend des "Handbook of Pressure Sensitive Adhesive Technology" von Donatas Satas (van Nostrand, New York 1989) besitzen. Auch hier kann die Steuerung der gewünschten Glasübergangstemperatur durch die Anwendung der *Fox*-Gleichung (G1) bei der Zusammenstellung der Monomermischung, welche der Polymerisation zugrunde liegt, erzielt werden. Für Haftklebemassen liegt die statische Glasübergangstemperatur des resultierenden Polymers vorteilhaft unterhalb 15 °C.

Zur Erzielung einer Glasübergangstemperatur $T_{G,A}$ der Polymere von $T_{G,A} \geq 30$ °C für Hitzeaktivierbare Klebemasse werden entsprechend dem vorstehend gesagten die Monomere sehr bevorzugt derart ausgesucht und die mengenmäßige Zusammensetzung der Monomermischung vorteilhaft derart gewählt, dass sich nach der *Fox*-Gleichung (G1) (vgl. T.G. Fox, Bull. Am. Phys. Soc. 1 (1956) 123) der gewünschte $T_{G,A}$-Wert für das Polymer ergibt.

$$\frac{1}{T_G} = \sum_n \frac{w_n}{T_{G,n}} \qquad\qquad (G1)$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Klebemassen werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, Seiten 60 bis 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) verwendet.

Die mittleren Molekulargewichte $M_n$ der bei der radikalischen Polymerisation entstehenden Haftklebemassen werden sehr bevorzugt derart gewählt, dass sie in einem Bereich von 20.000 bis 2.000.000 g/mol liegen; speziell für die weitere Verwendung als Schmelzhaftkleber werden Haftklebemassen mit mittleren Molekulargewichten $M_n$ von 100.000 bis 500.000 g/mol hergestellt.

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Erhöhung der Kohäsion zwischen der Klebemasse und der Folie kann die Folie einer Coronabehandlung unterzogen werden.

Des Weiteren ist ein Ätzen der Folie vorteilhaft, um die Klebemasse verankern zu können. In einer Variante der Erfindung ist zwischen unterer Folie und Klebmasse zur Verbesserung der Haftung der Klebmasse auf der Folie ein Primer vorhanden. Beschreibungen der üblicherweise verwendeten Primer finden sich zum Beispiel im "Handbook of Pressure Sensitive Adhesive Technology" von Donatas Satas (van Nostrand, 1989).

Vorzugsweise haben die obere und die untere Folie in dem Stanzling die gleiche Form und Größe und sind deckungsgleich angeordnet.

Weiter vorzugsweise gelten diese Bedingungen auch für eventuell vorhandene weitere Folien.

Eine typische Größe für den Stanzling, mit dem viele der kleineren Löcher verschlossen werden können, stellt eine (kreisrunde) Scheibe mit einem Durchmesser von 10 bis 60 mm, insbesondere 30 bis 40 mm dar.

Bevorzugt ist die untere Folie vollflächig mit der Klebemasse beschichtet.

Das erfindungsgemäße Verfahren zum Verschließen eines Loches insbesondere in einer Karosserie mit einem erfindungsgemäßen Stanzling besteht einfach darin, den Stanzling auf dem zu verschließenden Loch derart aufzubringen, dass das Loch vollständig von dem Stanzling abgedeckt ist

Bevorzugt ist, wenn der Stanzling konzentrisch über dem zu verschließenden Loch aufgebracht ist.

Vorteilhaft entsprechen die Konturen des Stanzling der Kontur des zu verschließenden Loches. Auf diese Weise ergibt sich ein symmetrischer Überstand der einzelnen Schichten des Stanzlings. Der Überstand beträgt vorzugsweise zwischen 1 und 20 mm, weiter vorzugsweise zwischen 5 und 10 mm.

Der erfindungsgemäße Stanzling ist besonders bei erhöhter mechanischer Beanspruchung den aus dem Stand der Technik bekannten Lösungen überlegen. Durch das Einbringen der Funktionsschicht, die als Barriere- oder zusätzlich als Primerschicht wirkt, wird nicht nur die Verankerung der Haftklebmasse auf dem Schwerfilm verbessert sondern auch die mechanische Festigkeit. Zusätzlich wird die Haftklebmasse von äußeren Einflüssen (wie zum Beispiel Migration von Schmiermitteln durch den Schwerfilm) abgeschirmt und bietet somit eine erhöhte Verklebungssicherheit über den Lebenszyklus des Fahrzeugs. Trotz der höheren Verklebungssicherheit läßt sich der Stanzling im Reparaturfall einfacher entfernen. Dieser Effekt beruht auf der ingesamt verbesserten Verbundhaftung und den deutlich besseren Zugfestigkeit. Des weiteren kann eine einzige Ausführungsform des Stanzlings eine Vielzahl von Löchern unterschiedlicher Größe abdecken.

Der Stanzling zeichnet sich aus durch:

- eine sehr hohe Belastbarkeit/ Reißfestigkeit/Durchschlagfestigkeit
- sehr gute Abdichtung gegen Feuchtigkeit/Feuchtigkeitsbarriere
- gute Abdichtung gegen Geräusche/Lärmdämpfung
- sehr gute Abdichtung gegen Öle
- eine hohe Reißkraft

Gemäß einer vorteilhaften Ausführungsform der Erfindung weist der Stanzling Durchstoßfestigkeiten von 200 bis 2000 N auf.

Die Oberfläche des Stanzteiles bietet eine ansprechende sowie glatte Oberfläche in den Punkten Optik und Haptik

**Prüfmethoden**

Die Messungen werden (sofern nichts anderes angegeben ist) bei einem Prüfklima von 23 ± 1 °C und 50 ± 5 % rel. Luftfeuchte durchgeführt.

**Molmasse Mn und der gewichtsmittleren Molmasse Mw**

Die Angaben der zahlenmittleren Molmasse Mn und der gewichtsmittleren Molmasse Mw in dieser Schrift beziehen sich auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 5 µm, $10^3$ Å, 8,0 mm * 50 mm (Angaben hier und im Folgenden in der Reihenfolge: Typ, Partikelgrösse, Porosität, Innendurchmesser * Länge; 1 Å = $10^{-10}$ m) verwendet. Zur Auftrennung wird eine Kombination der Säulen des Typs PSS-SDV, 5 µm, $10^1$ Åsowie $10^5$ Å und $10^6$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Polyacrylaten gegen PMMA-Standards (Polymethylmethacrylat-Kalibrierung) und sonst (Harze, Elastomere) gegen PS-Standards (Polystyrol-Kalibrierung).

Die Polyacrylate haben vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität des Polymerisats.

**K-Wert**

Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

**Glasübergangstemperatur**

Die Glasübergangstemperatur wird mittels dynamischer Scanning Kalorimetrie (DSC) bestimmt. Dazu werden 5 mg einer unbehandelten Polymerprobe in ein Aluminiumtiegelchen (Volumen 25 µL) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf -150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt.

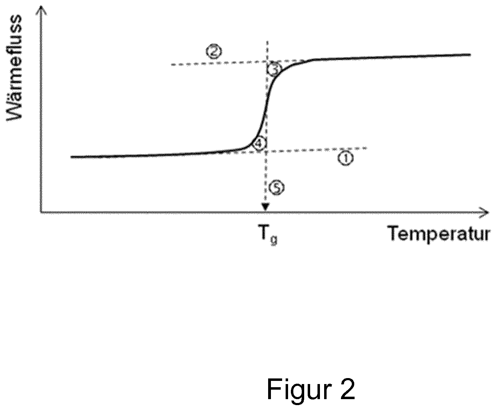

Die Glasübergangstemperatur wird folgendermaßen ausgewertet (siehe Figur 2):
An die Basislinie des Thermogramms vor ① und nach ② der Stufe wird jeweils eine Tangente angelegt. Im Bereich der Stufe wird eine Ausgleichsgerade ⑤ parallel zur Ordinate so gelegt, dass sie die beiden Tangenten schneidet, und zwar so, dass zwei Flächen ③ und ④ (zwischen der jeweils einen Tangente, der Ausgleichsgeraden und der Messkurve) gleichen Inhalts entstehen. Der Schnittpunkt der so positionierten Ausgleichsgeraden mit der Messkurve ergibt die Glasübergangstemperatur

**Klebkraft**

Die Bestimmung der Klebkraft (gemäß AFERA 5001) wird wie folgt durchgeführt. Als definierter Haftgrund wird galvanisch verzinktes Stahlblech mit einer Stärke von 2 mm (Bezug von der Firma Rocholl GmbH) eingesetzt. Das zu untersuchende verklebbare Flächenelement wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300mm/min abgezogen und die hierfür bei Raumtemperatur benötigte Kraft gemessen. Der Messwert (in N/cm) ergibt sich als Mittelwert aus drei Einzelmessungen.

**Durchstoßfestigkeit**

Die Durchstoßfestigkeit wird bestimmt, indem ein Loch mit einem Stanzling verschlossen und gezielt durchgestoßen wird. Dabei wird in einer Zugprüfmaschine ein Dorn eingespannt, welcher sich mit konstanter Geschwindigkeit auf das horizontal positionierte, verschlossene Loch zubewegt und dieses um 30 mm durchstößt. Die aufzuwendende Kraft wird dabei gemessen

Im Folgenden soll anhand einer Figur der Stanzling zum dauerhaften Verschließen von Löchern insbesondere in Blechen oder in Kunststoffteilen von Automobilkarosserien näher erläutert werden, ohne in irgendeiner Form einschränkend wirken zu sollen.

Es zeigt

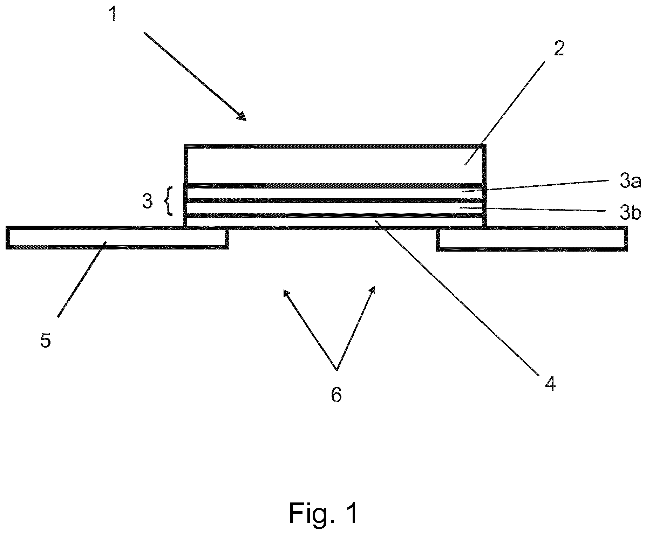

Figur 1    ein Loch in einer Karosserie, das es zu verschließen gilt, sowie den Zustand, nachdem das zu verschließende Loch verschlossen ist.

In der Karosserie 5 ist ein Loch 6 konstruktiv bedingt vorhanden, das es zu verschließen gilt.

Hierzu wird ein Stanzling 1 mit einem Träger aus einem Laminat aus mindestens zwei Kunststofffolien, nämlich einer oberen Folie 2 und einer unteren Folie 3, wobei die obere Folie 2 ein Flächengewicht von mindestens 1,0 kg/m$^2$ aufweist, und einer Haftklebemasse 4 derart auf dem Loch 6 fixiert, dass das Loch 6 vollständig vom Stanzling abgedeckt ist. Die untere Folie 3 besteht aus zwei Schichten, einer Kunststofffolie 3a sowie einer Funktionsschicht 3b, die Barriereeigenschaften aufweist.

Die Fläche des Stanzlings 1 ist größer als die Fläche des zu verschließenden Loches 6, so dass das Loch 6 vollflächig verschlossen ist.

Im Folgenden wird die Erfindung durch einige Beispiele näher erläutert, ohne die Erfindung damit einschränken zu wollen.

**Beispiel**

Der Träger des erfindungsgemäßen Stanzlings besteht aus einem Verbund von zwei Kunststofffolien.

Die obere Folie weist die folgende Zusammensetzung auf:

| | |
|---|---|
| 40 Gew.-% | CaCO$_3$ als Füllstoff |
| 30 Gew.-% | Polyethylen |
| 10 Gew.-% | EVA |
| 20 Gew.-% | Öl |

Die Dicke der Folie liegt bei 2000 μm, und das Flächengewicht beträgt 2,5 kg/m$^2$.

Die untere Folie der zwei Kunststofffolien besteht aus mindestens zwei Schichten, einer ersten Schicht in Form einer Kunststofffolie aus Polyethylen, die der Schwerfolie zugewandt ist, und einer zweiten Schicht in Form einer Funktionsschicht aus Polyamid.

Die Dicke der Kunststofffolie liegt bei 70 μm, und die Dicke der Funktionsschicht bei 20 μm.

Als Klebemasse wird eine übliche acrylatbasierende Haftklebemasse mit 80 μm auf den Träger beschichtet.

Prüfergebnisse:

| | |
|---|---|
| Klebkraft Stahl frisch | 13 N/cm |
| Klebkraft Stahl nach 1 Monat 40 °C | 12 N/cm |

**Vergleichsbeispiel**

Die Folie weist die selbe Zusammensetzung wie die Schwerfolie auf:

| | |
|---|---|
| 40 Gew.-% | CaCO$_3$ als Füllstoff |
| 30 Gew.-% | Polyethylen |
| 10 Gew.-% | EVA |
| 20 Gew.-% | Öl |

Es fehlt hier die als Sperrschicht wirkende untere Folie zwischen der Schwerfolie und der Klebemasse.

Die Klebemasse sowie das Auftragsgewicht sind dieselben, wie sie im Beispiel Verwendung finden.

| | |
|---|---|
| Klebkraft Stahl frisch | 10 N/cm |
| Klebkraft Stahl nach 1 Monat 40 °C | 2 bis 4 N/cm |

Die gemessenen Klebkräfte im Beispiel und im Vergleichsbeispiel unmittelbar nach dem Verkleben sind nahezu gleich.

Nach der Lagerung für einen Monat bei 40 °C hingegen ist die Klebkraft des Vergleichsbeispiels deutlich geringer als die Klebkraft des Beispiels.

Dies ist darauf zurückzuführen, dass im Vergleichsbeispiel Öl von der Schwerfolie in die Klebemasse migriert ist beziehungsweise - umgekehrt - Klebharz aus der Klebemasse in die Schwerfolie. Beide Effekte führen zu einer Reduzierung der Verklebungsfestigkeit.

Im Beispiel hingegen werden diese Migrationen durch die untere Folie aus einer ersten Schicht in Form einer Kunststofffolie aus Polyethylen und aus einer zweiten Schicht in Form einer Funktionsschicht aus Polyamid unterbunden.

**Patentansprüche**

1. Stanzling insbesondere zum dauerhaften Verschließen von Löchern insbesondere in Blechen oder in Kunststoffteilen,
   mit einem Träger aus einem Verbund von mindestens zwei Kunststofffolien, wobei die obere Folie der mindestens zwei Kunststofffolien ein Flächengewicht von mindestens 1,0 kg/m$^2$ aufweist und
   die untere Folie der mindestens zwei Kunststofffolien aus mindestens zwei Schichten besteht, eine erste Schicht in Form einer Kunststofffolie, die der oberen Folie zugewandt ist, und einer zweiten Schicht in Form einer Funktionsschicht, wobei auf der der oberen Folie abgewandten Seite der unteren Folie eine Klebemasse, insbesondere selbstklebende Klebemasse aufgebracht ist.

2. Stanzling nach Anspruch 1,
   **dadurch gekennzeichnet, dass**
   die obere Folie der mindestens zwei Kunststofffolien sowie die Kunststofffolie und die Funktionsschicht der unteren Folie jeweils vollflächig ausgeführt sind.

3. Stanzling nach einem der Ansprüche 1 oder 2,
   **dadurch gekennzeichnet, dass**
   die obere Folie ein Flächengewicht zwischen 1,0 und 6 kg/m$^2$, vorzugsweise zwischen 1,5 und 3,9 kg/m$^2$ mehr bevorzugt zwischen 1,5 und 2,5 kg/m$^2$ aufweist.

4. Stanzling nach zumindest einem der Ansprüche 1 bis 3,
   **dadurch gekennzeichnet, dass**
   die obere Folie eine insbesondere mineralisch gefüllte Polyolefinfolie, eine insbesondere mineralisch gefüllte Folie aus Polyethylen und EVA oder eine elastomermodifizierte Bitumenfolie ist.

5. Stanzling nach zumindest einem der vorherigen Ansprüche,
   **dadurch gekennzeichnet, dass**
   die Kunststofffolie der unteren Folie aus einem in der oberen Folie verwendeten Polymertypen besteht.

6. Stanzling nach zumindest einem der vorherigen Ansprüche,
   **dadurch gekennzeichnet, dass**
   die Kunststofffolie der unteren Folie aus Polyolefinen, insbesondere Polyethylen, besteht.

7. Stanzling nach zumindest einem der vorherigen Ansprüche,
   **dadurch gekennzeichnet, dass**
   die Kunststofffolie aus Polyethylen und die Funktionsschicht aus Polyamid besteht.

8. Stanzling nach zumindest einem der vorherigen Ansprüche,
   **dadurch gekennzeichnet, dass**

die Dicke der oberen Folie zwischen 400 und 3500 μm, vorzugsweise zwischen 1100 und 3500 μm, weiter vorzugsweise zwischen 1700 und 3500 μm und/oder
die Dicke der unteren Folie zwischen 25 und 200 μm, vorzugsweise zwischen 40 und 140 μm, weiter vorzugsweise zwischen 50 und 90 μm liegt.

**9.** Stanzling nach zumindest einem der vorherigen Ansprüche,
**dadurch gekennzeichnet, dass**
als Klebemasse eine Selbstklebemasse auf Acrylatbasis gewählt wird.

**10.** Stanzling nach zumindest einem der vorherigen Ansprüche,
**dadurch gekennzeichnet, dass**
der Stanzling konzentrisch über dem zu verschließenden Loch aufgebracht ist.

**11.** Stanzling nach zumindest einem der vorherigen Ansprüche,
**dadurch gekennzeichnet, dass**
die Konturen des Stanzling der Kontur des zu verschließenden Loches entsprechen, insbesondere dass der Überstand zwischen 1 und 20 mm, weiter vorzugsweise zwischen 5 und 10 mm beträgt.

**12.** Loch insbesondere in einer Karosserie dauerhaft verschlossen mit einem Stanzling nach zumindest einem der vorherigen Ansprüche.


**Claims**

**1.** Diecut especially for the permanent closing of holes especially in metal sheets or in plastics parts,
having a carrier consisting of an assembly of at least two polymeric films,
the upper film of the at least two polymeric films having a basis weight of at least 1.0 kg/m$^2$ and
the lower film of the at least two polymeric films consisting of at least two layers, a first layer in the form of a polymeric film which faces the upper film, and a second layer in the form of a functional layer, the side of the lower film facing away from the upper film bearing an applied adhesive, more particularly self-adhesive, composition.

**2.** Diecut according to Claim 1,
**characterized in that**
the upper film of the at least two polymeric films and also the polymeric film and the functional layer of the lower film are each implemented over the full area.

**3.** Diecut according to either of Claims 1 and 2,
**characterized in that**
the upper film has a basis weight of between 1.0 and 6 kg/m$^2$, preferably of between 1.5 and 3.9 kg/m$^2$, more preferably of between 1.5 and 2.5 kg/m$^2$.

**4.** Diecut according to at least one of Claims 1 to 3,
**characterized in that**
the upper film is a polyolefin film, more particularly a mineral-filled polyolefin film, a polyethylene and EVA film, more particularly a mineral-filled polyethylene and EVA film, or an elastomer-modified bitumen film.

**5.** Diecut according to at least one of the preceding claims,
**characterized in that**
the polymeric film of the lower film consists of a type of polymer used in the upper film.

**6.** Diecut according to at least one of the preceding claims,
**characterized in that**
the polymeric film of the lower film consists of polyolefins, more particularly polyethylene.

**7.** Diecut according to at least one of the preceding claims,
**characterized in that**
the polymeric film consists of polyethylene and the functional layer consists of polyamide.

**8.** Diecut according to at least one of the preceding claims,
**characterized in that**
the thickness of the upper film is between 400 and 3500 $\mu$m, preferably between 1100 and 3500 $\mu$m, more preferably between 1700 and 3500 $\mu$m and/or
the thickness of the lower film is between 25 and 200 $\mu$m, preferably between 40 and 140 $\mu$m, more preferably between 50 and 90 $\mu$m.

**9.** Diecut according to at least one of the preceding claims,
**characterized in that**
the adhesive composition selected is an acrylate-based self-adhesive composition.

**10.** Diecut according to at least one of the preceding claims,
**characterized in that**
the diecut is applied concentrically over the hole to be closed.

**11.** Diecut according to at least one of the preceding claims,
**characterized in that**
the contours of the diecut correspond to the contour of the hole to be closed, more particularly **in that** the margin of overlap is between 1 and 20 mm, more preferably between 5 and 10 mm.

**12.** Hole especially in a vehicle body permanently closed with a diecut according to at least one of the preceding claims.

**Revendications**

**1.** Pièce estampée en particulier pour la fermeture durable de trous en particulier dans des tôles ou dans des pièces de plastique,
comportant un support composé d'un composite d'au moins deux feuilles de plastique,
la feuille supérieure des au moins deux feuilles de plastique présentant un poids surfacique d'au moins 1,0 kg/m$^2$ et la feuille inférieure des au moins deux feuilles de plastique étant constituée d'au moins deux couches, une première couche sous forme d'une feuille de plastique qui est tournée vers la feuille supérieure, et une deuxième couche sous forme d'une couche fonctionnelle, une masse adhésive, en particulier une masse autoadhésive, étant appliquée sur le côté de la feuille inférieure opposé à la feuille supérieure.

**2.** Pièce estampée selon la revendication 1, **caractérisée en ce que** la feuille supérieure des au moins deux feuilles de plastique ainsi que la feuille de plastique et la couche fonctionnelle de la feuille inférieure sont réalisées à chaque fois en pleine surface.

**3.** Pièce estampée selon l'une quelconque des revendications 1 et 2, **caractérisée en ce que** la feuille supérieure présente un poids surfacique compris entre 1,0 et 6 kg/m$^2$, de préférence entre 1,5 et 3,9 kg/m$^2$, plus préférablement entre 1,5 et 2,5 kg/m$^2$.

**4.** Pièce estampée selon au moins l'une des revendications 1 à 3, **caractérisée en ce que** la feuille supérieure est en particulier une feuille de polyoléfine remplie de manière minérale, en particulier une feuille de polyéthylène et d'EVA remplie de manière minérale ou une feuille de bitume modifiée par un élastomère.

**5.** Pièce estampée selon au moins l'une des revendications précédentes, **caractérisée en ce que** la feuille de plastique de la feuille inférieure est constituée d'un type de polymère utilisé dans la feuille supérieure.

**6.** Pièce estampée selon au moins l'une des revendications précédentes, **caractérisée en ce que** la feuille de plastique de la feuille inférieure est constituée de polyoléfines, en particulier de polyéthylène.

**7.** Pièce estampée selon au moins l'une des revendications précédentes, **caractérisée en ce que** la feuille de plastique est constituée de polyéthylène et la couche fonctionnelle est constituée de polyamide.

**8.** Pièce estampée selon au moins l'une des revendications précédentes, **caractérisée en ce que** l'épaisseur de la feuille supérieure se situe entre 400 et 3 500 micromètres, de préférence entre 1 100 et 3 500 micromètres, de manière plus préférée entre 1 700 et 3 500 micromètres et/ou

l'épaisseur de la feuille inférieure se situe entre 25 et 200 micromètres, de préférence entre 40 et 140 micromètres, de manière plus préférée entre 50 et 90 micromètres.

9. Pièce estampée selon au moins l'une des revendications précédentes, **caractérisée en ce qu'**une masse autoadhésive à base d'acrylate est choisie en tant que masse adhésive.

10. Pièce estampée selon au moins l'une des revendications précédentes, **caractérisée en ce que** la pièce estampée est appliquée de manière concentrique sur le trou devant être fermé.

11. Pièce estampée selon au moins l'une des revendications précédentes, **caractérisée en ce que** les contours de la pièce estampée correspondent au contour du trou devant être fermé, en particulier **en ce que** la saillie est comprise entre 1 et 20 mm, de manière plus préférée entre 5 et 10 millimètres.

12. Trou, en particulier dans une carrosserie, fermé durablement avec une pièce estampée selon au moins l'une des revendications précédentes.

Fig. 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3036100 A1
- WO 2015024726 A
- WO A1 A
- DE 202012101764 U
- DE 4313008 A1
- EP 1978069 A1

**In der Beschreibung aufgeführte Nicht-Patentliteratur**

- **T.G. FOX.** *Bull. Am. Phys. Soc.,* 1956, vol. 1, 123
- **P. E. HINKAMP.** *Polymer,* 1967, vol. 8, 381